# EUROPEAN PATENT APPLICATION

(11) **EP 2 042 423 A1**
(43) Date of publication of application: **01.04.2009**
(21) Application number: 08006142.7
(22) Date of filing: 28.03.2008
(51) Int. Cl.: B62M 9/12

(54) **Support for a bicycle front gearshift and bicycle front gearshift comprising such a support**

(30) Priority: 28.09.2007 IT MI20071871
(71) Applicant: CAMPAGNOLO S.r.l., 36100 Vicenza (VI) (IT)
(72) Inventor: Pasqua, Paolo, 36043 Camisano Vicentino (Vicenza) (IT)
(74) Representative: Castiglia, Paolo

(57) **Abstract**

The invention relates to a support (22) for a bicycle front gearshift (20), comprising an anchoring portion (32) to a seat post tube of a bicycle and a coupling portion (34) to a thrusting member (24) of a bicycle chain. The anchoring portion (32) is structurally distinct from the coupling portion (34) and can thus be made from a different material to that of the coupling portion (34). In particular, the anchoring portion (32) and the coupling portion (34) can be designed separately in relation to their specific and different function.

## Description

The present invention relates to a support for a bicycle front gearshift.

The invention also relates to a bicycle front gearshift comprising such a support and a bicycle comprising the aforementioned front gearshift. Preferably, the aforementioned bicycle is a racing bicycle.

Furthermore, the present invention relates to a method for manufacturing a support for a bicycle front gearshift.

As known, the bicycle is a mechanical vehicle moved by muscular driving force that is transmitted to the rear "driving" wheel through a motion transmission system. The motion transmission system comprises a pair of crank arms, on which the cyclist exerts a propulsive thrust, one or more driving toothed wheels, made to rotate by direct coupling with the crank arms, and one or more driven toothed wheels or "sprockets", made to rotate by the driving toothed wheels through a chain, said sprockets being coupled with the hub of the rear wheel.

In particular, racing bicycles comprise a plurality of sprockets of various diameters and a plurality of driving toothed wheels, also of various diameters. The chain simultaneously engages a driving toothed wheel and a sprocket and is selectively movable over them through a gearshift device, so as to obtain the combination of driving toothed wheel and sprocket that offers the most favourable transmission ratio for the conditions of the route.

The bicycle typically comprises a front gearshift, which moves the chain from one driving toothed wheel to another, and a rear gearshift, which moves the chain from one sprocket to another.

In particular, the present application is directed to the front gearshift.

In the prior art, the front gearshift comprises a chain guide that embraces the chain to exert the necessary thrust thereon in order to move it, a support to fasten the front gearshift itself to the seat post tube of the bicycle frame and two articulation arms to movably connect the chain guide to the support. Basically, the chain guide, the support and the two articulation arms define an articulated quadrilateral that allows the chain to be moved on the driving toothed wheels.

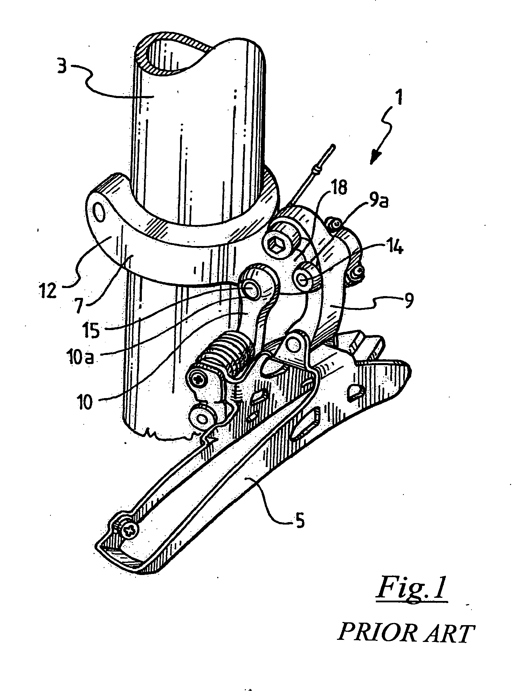

Figure 1 shows a front gearshift of the prior art, indicated with 1, fastened to a seat post tube 3 of a bicycle. It is clearly possible to distinguish a chain guide 5 and a support 7, which are connected by two articulation arms 9 and 10.

The support 7 embraces a seat post tube 3 of the bicycle frame through a clip-shaped portion 12. The support 7 houses two articulation pins 14 and 15. Respective ends 9a and 10a of the articulation arms 9 and 10 are rotatably mounted on such pins. Said pins 14 and 15 are associated with a portion 18 of the support 7 made in a single piece with the clip-shaped portion 12 and extending canti-levered from such a portion 12.

The Applicant has found that the front gearshift just described has various drawbacks, the main one of which is that during operation, due to the stresses exerted by the chain on the chain guide, the portion of the clip-shaped support tends to easily loosen, with the consequent loss of the correct positioning of the chain guide of the front gearshift with respect to the frame and to the driving toothed wheels.

The technical problem at the basis of the present invention is to provide a support for a bicycle front gearshift that ensures stable clamping on the seat post tube of the frame, so as to simply and effectively overcome the drawbacks aforementioned with reference to the prior art.

The present invention therefore relates, in a first aspect thereof, to a support for a bicycle front gearshift, comprising an anchoring portion to a seat post tube of a bicycle, and a coupling portion with a thrusting member of a bicycle chain, and characterised in that said anchoring portion is structurally distinct from said coupling portion.

Throughout the present description and in the subsequent claims, the expression "structurally distinct" used with reference to the anchoring portion and with respect to the coupling portion, or vice-versa, is used to indicate that the two portions are defined at respective elements obtained separately with distinct methods of manufacturing, such elements thus being able to be made from the same material or from two different materials.

Advantageously, in the support for the bicycle front gearshift of the present invention, the anchoring portion and the coupling portion - which are very different parts in their function, shape, thickness and tensional stress - can be better designed in relation to their specific function, thus being of a simpler shape and stronger than the respective portions of the supports of the prior art.

Indeed, the present invention allows a support to be made without those rapid changes in section that are provided in the supports of the prior art in the transition area between the clip-shaped portion and the portion where the two articulation pins are housed. Such rapid changes in section cause an accumulation of residual processing tensions, particularly high in the case in which the support is made by moulding of plastic material.

In the support for the bicycle front gearshift of the present invention, these residual tensions are substantially absent, so that the total operating tension is due to just the sum of the tensions of clamping the anchoring portion and of the reaction tensions of the chain to the thrust exerted by the chain guide of the front gearshift. The Applicant has advantageously found that such a total tension is no longer sufficient to permanently deform the anchoring portion up to a level such as to make its clamping ineffective, also in the case in which the anchoring portion is at high temperatures.

In accordance with a first embodiment of the support of the present invention, the aforementioned coupling portion is removably associated with the anchoring portion, for example through rigid connecting elements selected from the group consisting of pins, screws, bolts, rivets or other connecting elements known to a man skilled in the art. In this case, the aforementioned connecting elements are housed in respective holes, aligned with each other, formed in the anchoring portion and in the coupling portion.

In accordance with a second embodiment of the support of the present invention, the aforementioned coupling portion is irremovably associated with the anchoring portion, for example through gluing, co-moulding, caulking or other processes known to a man skilled in the art.

Irrespective of the coupling method between coupling portion and anchoring portion of the support of the present invention, the anchoring portion has preferably a substantially annular shape. Such an anchoring portion preferably comprises two first ends that can be coupled together through at least one bolt or screw to obtain the clamping of the anchoring portion around the seat post tube of the bicycle.

In particular, in a first preferred embodiment of the support of the present invention, the aforementioned anchoring portion comprises a pair of jaws structurally distinct from each other, each jaw comprises one of the aforementioned first ends and is associated with the other jaw at a respective second end opposite the aforementioned first end.

In this case, preferably, the aforementioned coupling portion is associated with at least one first jaw of the aforementioned pair of jaws.

In a second preferred embodiment of the support of the present invention, the aforementioned anchoring portion comprises a single jaw defining an elastic monolithic clip.

Irrespective of the specific embodiment of the anchoring portion of the support of the present invention, such an anchoring portion comprises at least one connecting part to the aforementioned coupling portion housed in a groove formed in the aforementioned coupling portion.

In this way clearances are avoided between the anchoring portion and the coupling portion to the advantage of the precision of gearshifting.

Preferably, the anchoring portion comprises a part that, when the support is mounted on the seat post tube of the bicycle, faces towards the rear wheel of the bicycle and is lower with respect to the remaining part of the anchoring portion.

Such a support is particularly advantageous when it has to be applied to bicycle seat post tubes that are very close to the rear wheel of the bicycle. Indeed, the lowest part of the anchoring portion, i.e. the part that is intended to face towards the rear wheel of the bicycle, is positioned lower down (and therefore in the area in which the rear wheel goes away from the seat post tube) compared to where it would be positioned if the anchoring portion extended entirely according to a plane substantially perpendicular to the axis of the seat post tube.

Preferably, the aforementioned connecting part is defined in the aforementioned part of the anchoring portion intended to face towards the rear wheel of the bicycle and the aforementioned groove has end portions arranged at different heights so that, when the support is mounted on the seat post tube of the bicycle, an end portion of the aforementioned groove facing towards the rear wheel of the bicycle is lower than the other end portion of such a groove.

In a particularly advantageous embodiment of the present invention, the aforementioned connecting part is held in the aforementioned groove through pins and gluing, so as to make a particularly stable coupling.

In the case in which the support of the present invention is intended to be used in a motorised gearshift, the aforementioned coupling portion comprises a seat for housing a worm screw.

In this case the aforementioned advantages of decrease in residual tensions in the anchoring portion due to the simplicity of manufacturing are particularly evident. Indeed, since in a motorised gearshift the coupling portion inevitably takes on the form of a massive and very complex piece, in the supports of the prior art the connection of such a coupling portion with the anchoring portion, having a thin section, is very precarious.

The coupling portion is preferably made from composite material, more preferably from reinforced composite material.

Advantageously, the coupling portion made in this way can easily be manufactured by injection moulding and possibly machined with a machine tool, to obtain complex shapes keeping a high degree of structural strength and lightness.

Preferably, the aforementioned anchoring portion is at least partially made from a material having a linear thermal expansion coefficient lower than or equal to 5·10⁻⁵ m/m°K.

More preferably, at least the connecting part of the anchoring portion to the coupling portion is made from said material with a thermal expansion coefficient lower than or equal to 5·10⁻⁵ m/m°K.

In this way, advantageously, it is practically certain that the anchoring portion intended to couple the support with the seat post tube of a standard bicycle frame, even if subjected to high temperatures (for example because the bicycle is left in the boot of a car under the sun), is not subjected to a stretching, due to thermal expansion, of more than two tenths of a millimetre for which reason it does not loosen.

Preferably, such a material is a metallic material.

This selection offers an excellent compromise between cost-effectiveness of manufacturing and linear thermal expansion, which is of the order of 5·10⁻⁶ m/m°K.

In a particularly preferred embodiment of the support of the present invention, the whole anchoring portion is made from metallic material.

Alternatively, the material of the anchoring portion, or of just the connecting part of the anchoring portion to the coupling portion, is a structural composite material.

Advantageously, such a material has a thermal expansion coefficient lower than that of the metal and of the order of 5·10⁻⁷ m/m°K, for which reason the deformation by tension, even if the anchoring portion is put under a high temperature, is totally negligible.

In a second aspect thereof, the present invention relates to a bicycle front gearshift, comprising a support and a chain guide for moving a bicycle chain, connected to each other by at least two articulation arms, said support being of the type described above.

Preferably, such a bicycle front gearshift has individually or in combination all of the structural and functional characteristics discussed above with reference to the aforementioned support for a bicycle front gearshift and therefore it has all of the aforementioned advantages.

In a third aspect thereof, the present invention relates to a bicycle comprising a front gearshift of the type described above.

Preferably, such a bicycle has individually or in combination all of the structural and functional characteristics discussed above with reference to the aforementioned front gearshift and therefore it has all of the aforementioned advantages.

In a fourth aspect thereof, the present invention relates to a method for manufacturing a support for a bicycle front gearshift, comprising an anchoring portion to a seat post tube of a bicycle and a coupling portion with a thrusting member of a bicycle chain, characterised in that it comprises the following steps of:
- making said anchoring portion,
- making said coupling portion, e
- rigidly associating said coupling portion and said anchoring portion with each other.

Such a method allows the aforementioned advantages to be obtained. In particular, with the aforementioned method the anchoring portion and the coupling portion can be manufactured separately. They can thus be better designed in relation to their specific function, having a simpler shape and being stronger than the respective portions of the supports of the prior art.

As already stated above, the coupling portion can be removably associated with the anchoring portion, for example through pins, screws, bolts, rivets or other connecting elements known to a man skilled in the art, or be irremovably associated with the anchoring portion, for example through gluing, co-moulding, caulking or other processes known to a man skilled in the art.

Further characteristics and advantages of the present invention shall become clearer from the following detailed description of preferred embodiments thereof, made with reference to the attached drawings and given for indicating and not limiting purposes. In such drawings:
- figure 1 schematically shows a perspective view of a bicycle front gearshift according to the prior art;
- figure 2 schematically shows an exploded perspective view of a bicycle front gearshift comprising a support according to a first embodiment of the present invention;
- figure 3 schematically shows an exploded perspective view of a second embodiment of a support for a bicycle front gearshift according to the present invention;
- figure 4 schematically shows a perspective view of a bicycle front gearshift comprising a support according to a third embodiment of the present invention;
- figure 5 schematically shows an exploded perspective view of the support of figure 4;
- figures 6 and 7 schematically show perspective views, according to different angles, of the support of figure 4;
- figure 8 schematically shows a front view of the support of figure 4 mounted on a tube of a bicycle frame near to a rear wheel in normal working conditions;
- figure 9 schematically shows a plan view from above of the support of figure 4.

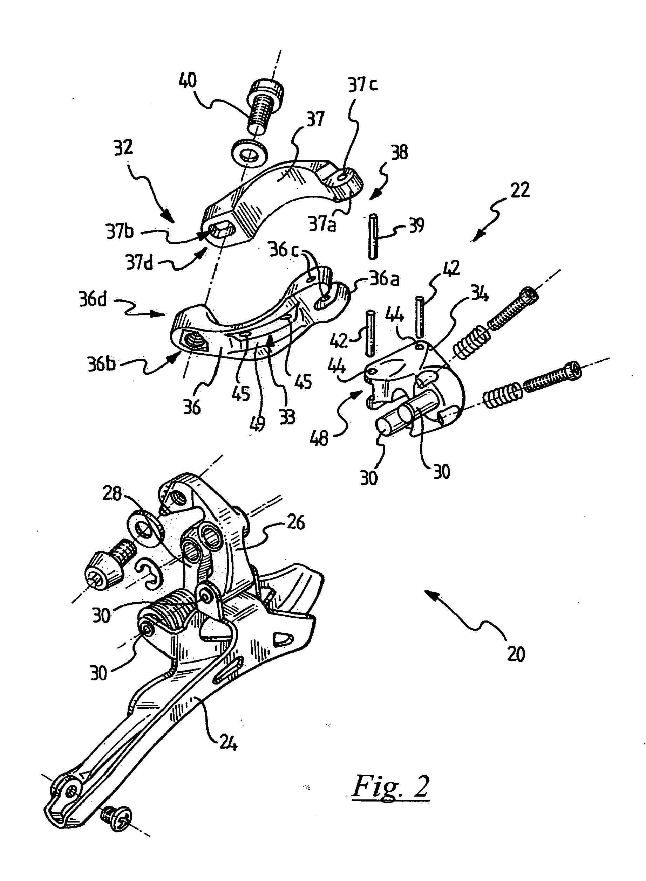

With initial reference to figure 2, a first embodiment of a support 22 for a bicycle front gearshift 20 in accordance with the present invention is shown.

In particular, the front gearshift 20 comprises the support 22 itself, intended to fasten the gearshift 20 to the frame of a bicycle (in particular to the seat post tube of the bicycle, indicated with 3 in the figure 1 relative to the prior art), a thrusting member 24 of the bicycle chain, like for example a chain guide (the chain is not shown since it is *per sè* conventional), intended to engage and move the chain, a front articulation arm 26 and a rear articulation arm 28, where the terms front and rear refer to the configuration in which the support is mounted on the bicycle. The two articulation arms 26 and 28 connect the chain guide 24 to the support 22 thanks to four pins 30, thus defining an articulated quadrilateral.

The support 22 comprises an anchoring portion 32 to the seat post tube 3 of the bicycle and a coupling portion 34 with the articulation arms 26 and 28, said portions 32 and 34 being - in accordance with the present invention - structurally distinct from each other.

The anchoring portion 32 in use is intended to embrace the seat post tube 3 of the bicycle and comprises a pair of jaws 36 and 37 joined at one of their ends through a hinge 38 and at the opposite end through a lock screw 40.

In particular, the jaw 37 has a cap-shaped end 37a that is inserted into a forked end 36a of the jaw 36. The ends 37a and 36a have respective through holes 37c and 36c (one hole 37c on the end 37a and two holes 36c on the end 36a), which are aligned for the insertion of a rotation pin 39. The jaw 37 has, at the end 37d opposite the end 37a, an opening 37b crossed by the screw 40 whereas the jaw 36 has, at the end 36d opposite the end 36a, a threaded hole 36b in which the screw 40 engages. Alternatively, the screw 40 can cross a hole without threading provided on the jaw 36 instead of the threaded hole 36b, and be engaged in a nut (not illustrated).

The coupling portion 34 is permanently associated with at least one of the articulation pins 30, for example by co-moulding or gluing, and comprises a seat for a second articulation pin 30. Alternatively, both of the pins 30 can be permanently or dismountably associated with the coupling portion 34.

The anchoring portion 32 is removably associated with the coupling portion 34, in the example illustrated in figure 2 through rigid connecting elements such as a pair of pins 42 that are inserted into holes 44 of the coupling portion 34 and into holes 45 of the jaw 36 aligned with each other.

In order to totally eliminate the clearance between the anchoring portion 32 and the coupling portion 34, in addition to the connection through pins 42, it is also possible to glue together the two portions 32 and 34 at a connecting part 33 specially formed in the anchoring portion 32. Such a connecting part 33, in the example illustrated in figure 2, is defined by a ribbing 49.

The coupling portion 34 comprises a groove 48 in which the ribbing 49 is inserted. The aligned holes 44 and 45 are made through the walls of the groove 48 and through the ribbing 49.

The connection between the anchoring portion 32 and the coupling portion 34 just described and illustrated in figure 2 is given purely as an example; a man skilled in the art will have no difficulty in understanding that any type of connection that makes a rigid coupling is suitable for the purpose. For example, it is possible to make a removable connection through pins, screws, bolts, rivets or other connecting elements known to the man skilled in the art, or an irremovable connection through gluing, co-moulding, caulking or other processes known to the man skilled in the art.

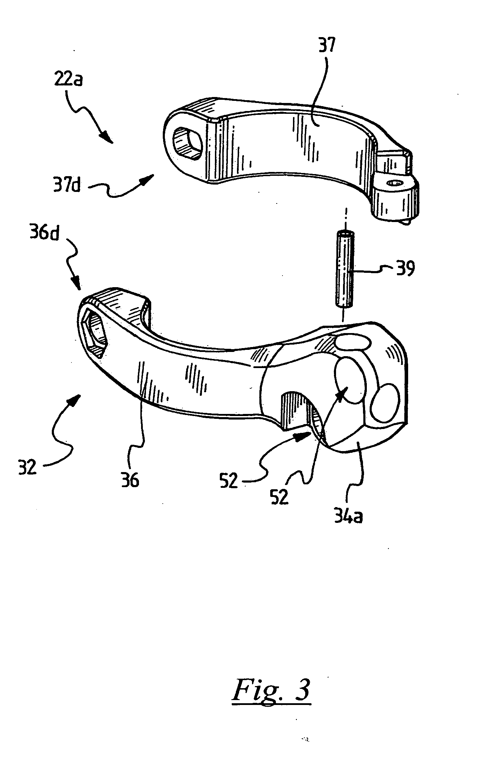

Figure 3 shows a second embodiment of the support according to the present invention, which is indicated with 22a. In figure 3, structural elements that are identical or equivalent from the functional point of view to those of the support 22 described above with reference to figure 2 shall be indicated with the same reference numerals and they shall not be described any further.

In particular, the support 22a differs from the support 22 of figure 2 substantially in that the jaw 36 is associated with the coupling portion 34a through co-moulding. In figure 3 through holes 52 formed in the coupling portion 34a for the insertion of a pair of articulation pins 30 (not illustrated) are also shown.

According to another embodiment of the support of the present invention, not illustrated, the jaws 36 and 37 of the anchoring portion 32 of the support 22 of figure 2 are integrally joined together at one end and engaged by a lock screw at the opposite end. In other words, in this case the two jaws 36 and 37 of the anchoring portion 32 of figure 2 form a single jaw defining an elastic monolithic clip, which has a substantially annular shape. Such a clip is interrupted at a sector thereof so as to define two ends that can be coupled together.

The anchoring portion 32 and the coupling portion 34 can be made with any material, like for example an aluminium alloy, a composite material or a polymer.

By composite material it is meant a material consisting of at least two components including a polymeric matrix and a filler for example comprising structural fibres, granules or powders. The structural fibres are preferably selected from the group consisting of carbon fibres, glass fibres, aramid fibres, ceramic fibres, boron fibres and combinations thereof. Carbon fibres are particularly preferred. Preferably, the polymeric material is thermosetting and preferably comprises an epoxy resin. However, the use of a thermoplastic material is not excluded.

By structural composite materials it is meant those materials that contain structural fibres with a length of over five millimetres. The arrangement of said structural fibres in the polymeric material can be a random arrangement of pieces or small sheets of structural fibres, a substantially unidirectional ordered arrangement of fibres, a substantially bidirectional ordered arrangement of fibres or a combination of the above.

By reinforced composite materials, on the other hand, it is meant materials comprising a polymeric matrix filled with fibres of a length shorter than or equal to five millimetres and/or with powders and/or with granules. It should be observed that the dimensions shown refer to the length of the fibre that can be found in a finished piece.

The reinforced composite materials have a structural strength lower than that of composite structural materials, but in general they are suitable for injection moulding and they are easy to work, which is why they are particularly preferred for manufacturing the coupling portion 34, to which they also confer a considerable lightness. However, for such a coupling portion the use of a simple polymer is not excluded.

Composite structural materials have a high structural strength and a very low linear thermal expansion coefficient, in general of the order of 5·10⁻⁷ m/m°K, for which reason they are particularly preferred for manufacturing the anchoring portion 32, or at least one of the two jaws 36 and 37 of figures 2 and 3.

A less expensive alternative, is to manufacture the anchoring portion 32 - or at least a part thereof, for example the jaw 36 of figures 2 and 3 - from metal, like an aluminium alloy and/or magnesium, which in any case has a linear thermal expansion coefficient of the order of 5·10⁻⁶ m/m°K. In general, materials having a linear thermal expansion coefficient lower than 5·10⁻⁵ m/m°K are acceptable to manufacture the anchoring portion 32.

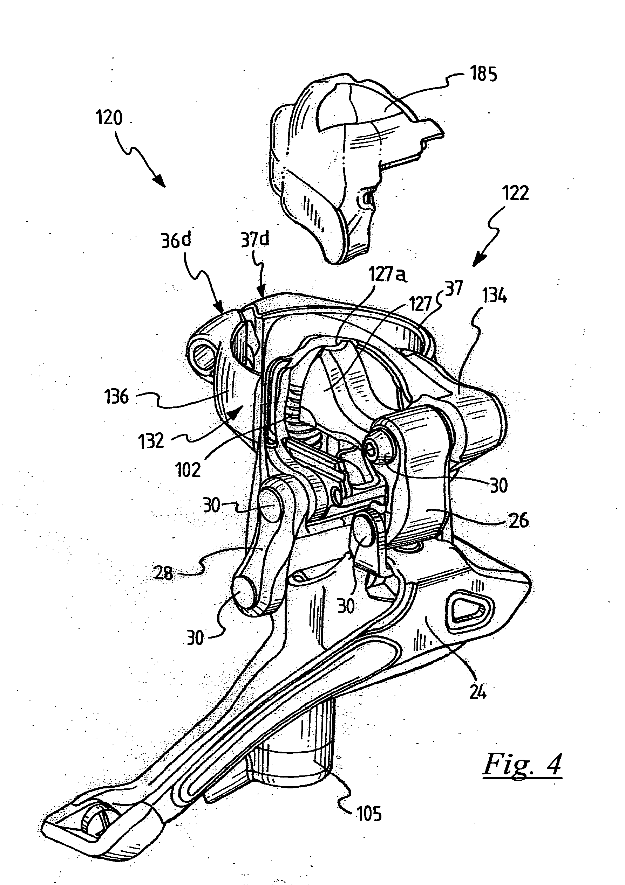

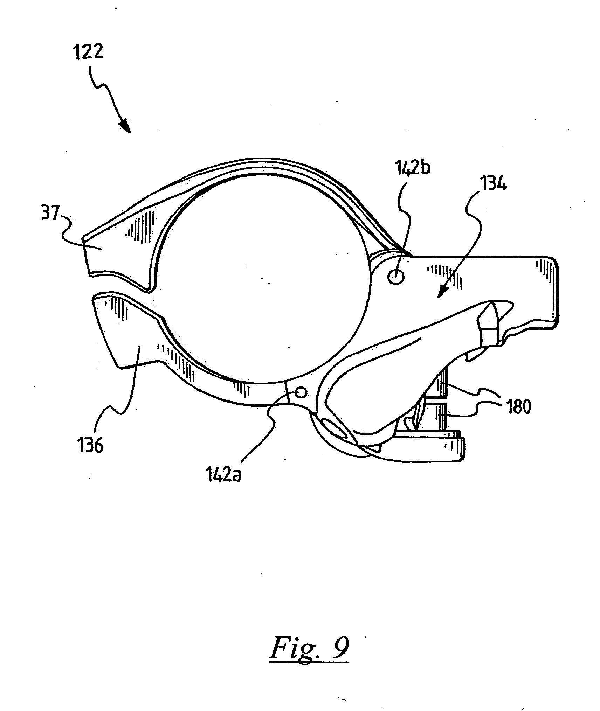

Figures 4-9 show a third embodiment of the support according to the present invention, which is indicated with 122. The support 122 is part of a bicycle front gearshift 120. In particular, the front gearshift 120 is a so-called motorised gearshift, of the type analogous to the one described in patent n° US 6679797 to the same Applicant.

In figure 4, structural elements that are identical or equivalent from the functional point of view to those of the gearshift 20 described above with reference to figure 2 shall be indicated the same reference numerals and they shall not be described any further.

The gearshift 120 comprises a support 122 comprising an anchoring portion 132, substantially identical to the anchoring portion 32 of figure 2, and a coupling portion 134, said portions 132 and 134 - in accordance with the present invention - being structurally distinct from each other.

The main difference with respect to the gearshift 20 of figure 2 is given by the fact that the coupling portion 134 has a more complex shape than that of the portion 34 of figure 2 and is adapted to house a worm screw 102, actuated by an electric motor 105.

A chain guide 24 is connected to the coupling portion 134 through the front articulation arm 26 and the rear articulation arm 28, which are movable in rotation about the pins 30, in a totally similar way to what has already been described in reference to the gearshift 20 of figure 2.

The front articulation arm 26 has an extension 127 terminating with an engagement portion 127a, carrying a nut screw, which engages with the worm screw 102. When the worm screw 102, actuated by the electric motor 105, moves the engagement portion 127a of the extension 127, the arm 26 rotates about a pin 30 that is fixed with respect to the coupling portion 134, like a lever pivoted at the aforementioned pin 30, causing the movement of the chain guide 24.

What has been stated above with regard to the connection and to the materials used for the anchoring portion 32 and the coupling portion 34 of figure 2 is also valid for the corresponding anchoring and coupling portions 132, 134 of figure 4.

In this case, in addition to the advantages listed above there is the fact that the support 122, which comprises the coupling portion 134 having a *per sè* complex shape, is easier to be moulded than the support for a front gearshift illustrated in patent n° US 6679797 to the same Applicant, since the coupling portion 134 is made separately from the anchoring portion 132.

Moreover, the residual tensions inside the coupling portion 134 are lower, since there are no long portions with a thin section (such as the anchoring portion 132) connected roughly to portions of large thickness (such as the coupling portion 134). In this way, the cooling of the pieces (in particular of the coupling portions 134) in the mould is substantially uniform and the residual tensions are very limited. This allows even pieces with a particularly complicated shape to be moulded (in particular coupling portions 134).

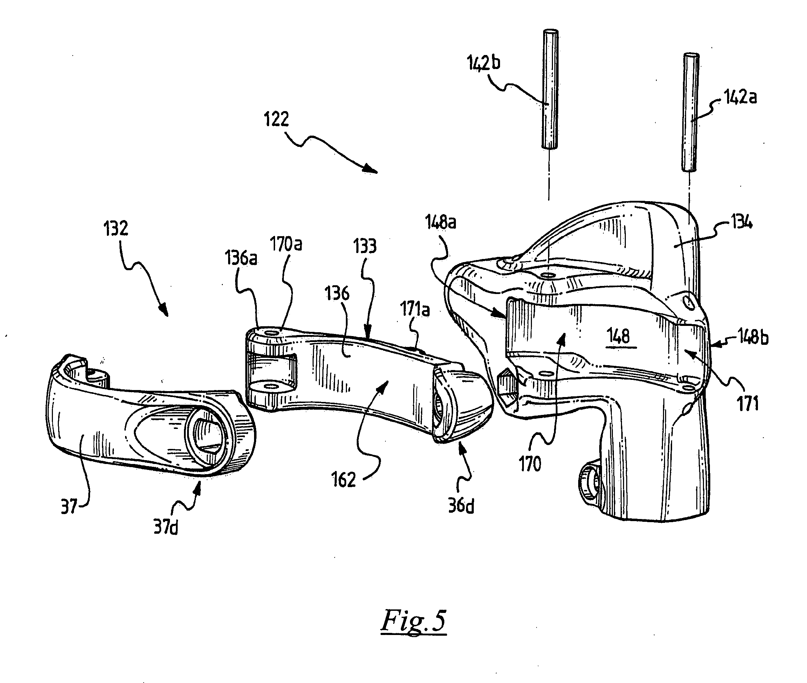

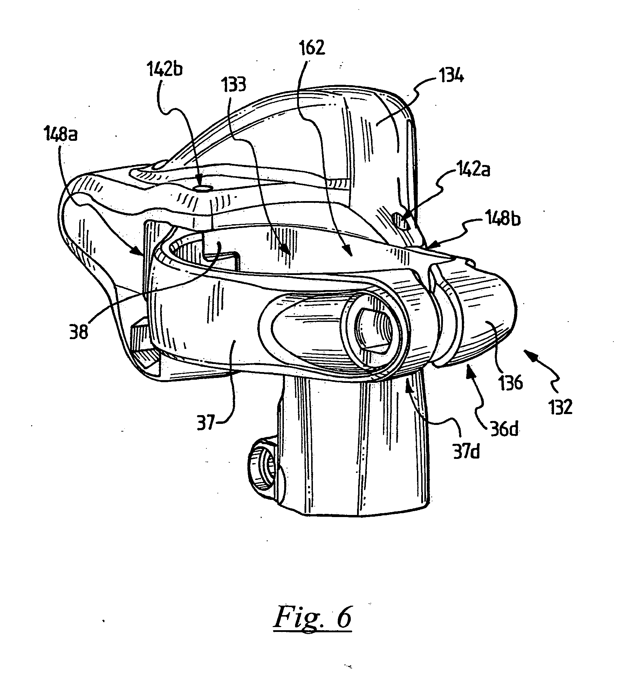

As illustrated in figures 5 and 6, the support 122 comprises a groove 148 of a shape such as to contain for the whole height thereof a connecting part 133 of a jaw 136.

Two pins 142a and 142b cross the whole height of the connecting part 133 of the jaw 136 and not only a ribbing thereof as occurs in the support 22 of figure 2. The groove 148 also comprises two deeper end areas 170 and 171 at the passing points of the pins 142a and 142b, so as to house corresponding widenings 170a and 171a projecting outside from the jaw 136.

A fork-shaped end 136a of the jaw 136 is totally housed in the deeper end area 170 and is held here by the pin 142b, which thus acts as an articulation pin between the jaw 136 and the jaw 37, thus replacing the function of the pin 39 of the support 22 of figure 2. For this reason the pin 142b preferably has a larger diameter than the pin 142a.

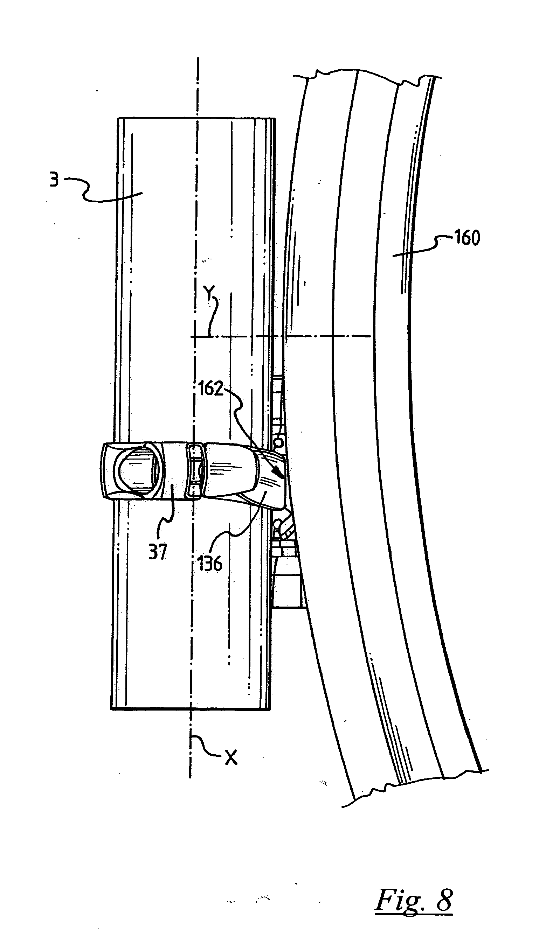

In figures 5, 6 and 8 it can also be seen that, when the support 122 is mounted on the seat post tube 3 of the bicycle, at least one part 162 of the jaw 136 is lower than the remaining part of the jaw 136, and than the jaw 37. In other words, the jaw 136 is "skewed", i.e. it has at least one part 162 with "inclined" extension (downwards) with respect to the extension of the remaining part of the jaw 136 and of the jaw 37, which on the other hand substantially follow a plane perpendicular to the axis X of the seat post tube 3 of the bicycle on which the support 122 is mounted, as shown in figure 8.

Moreover, figure 8 shows that the anchoring portion 132 is advantageously mounted on the seat post tube 3 of the bicycle with the jaw 136 facing towards the rear wheel 160 of the bicycle.

In particular, the jaw 136 has a descending progression at the part 162 that, in use, is intended to face the rear wheel 160 of the bicycle. Thanks to this provision, the part 162 of jaw 136 that faces the rear wheel 160 remains farther away, with respect to the rest of the anchoring portion 132, from a plane Y that is perpendicular to the axis X and at which the distance between the wheel 160 and the seat post tube 3 of the bicycle is at its minimum.

This is particularly advantageous when the support 122 must be applied to seat post tubes 3 that are very close to the rear wheel 160. Indeed, since the position of the support on the seat post tube is dictated by the position that the chain guide must take up with respect to the driving toothed wheels, if the jaw 136 did not have the aforementioned part 162 and lied substantially in the same plane perpendicular to the axis X in which the jaw 37 extends, the anchoring portion 132 - given the thickness of the jaws - would run the risk of interfering with the rear wheel of the bicycle. Differently, with the jaw 136 skewed in the aforementioned manner, the part 162 is at a greater distance from the rear wheel 160.

The connecting part 133 is defined in said part 162 of the jaw 136, and is housed in the groove 148, which also has a "skewed" shape. In other words, when the support 122 is mounted on the seat post tube 3 of the bicycle, the groove 148 is substantially "inclined" with respect to a plane perpendicular to the axis X of the seat post tube 3.

In figure 5 it can be seen how the openings 148a and 148b of the coupling portion 134, arranged at the opposite end portions of the groove 148 and from where the jaw 136 projects when mounted on the coupling portion 134, are not aligned with respect to a plane perpendicular to the axis X of the seat post tube 3, but are at different heights, so that the end portion 148b of said groove 148 facing towards the rear wheel 160 of the bicycle is lower than the other end portion 148a of the groove 148.

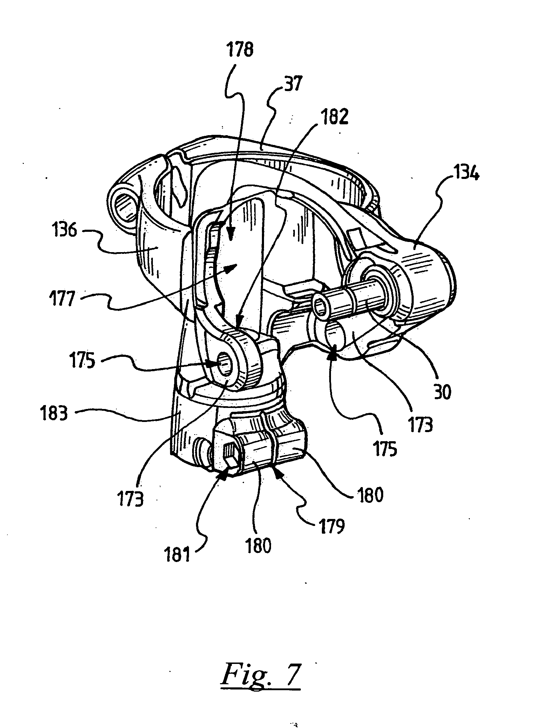

Figure 7 shows the coupling portion 134 according to a point of view different to that of figure 6. It should be noted that the pin 30 is integrated in the coupling portion 134, for example through co-moulding. The aforementioned pin 30 is intended to couple with the front articulation arm 26.

The coupling portion 134 also comprises a pair of plates 173 faced to one other so as to form a chain guide and on which a respective hole 175 is formed, said holes 175 being aligned with each other for the passage of the other pin 30, intended to couple with the rear articulation arm 28.

The coupling portion 134 is hollow so as to define a housing seat 177 for the worm screw 102. Such a seat 177 has a top opening 178, from the part of the chain guide 173 and of the co-moulded pin 30, for the access of the extension 127 of the front articulation arm 26. A cover 185 (figure 4), fixedly fitted along the edge of the opening 178, protects the worm screw 102 and the portion 127a, shaped like a nut screw, of the extension 127 of the front articulation arm 26.

The housing seat 177 is in communication with a tubular space 182 coaxial thereto and formed in a part 183 of the coupling portion 134, adapted to be coupled with an end of the electric motor 105 (figure 4).

The part 183 of the coupling portion 134 comprises an elastic clip 179, obtained by forming two wings 180 which are elastically deformable and integral with the coupling portion 134. The wings 180 are crossed by respective holes 181 which are aligned with each other for the passage of a bolt or locking screw (not shown).

The assembly of the support for the bicycle front gearshift takes place in the following way. The anchoring portion (32 in figures 2 and 3, 132 in figure 4) is opened by rotating the jaws (36 and 37 in figures 2 and 3, 136 and 37 in figure 4) about the rotation pin 39 (figures 2 and 3) or the pin 142b (figure 5) of the hinge (38 in figures 2 and 6). It is thus possible to arrange the anchoring portion (32 in figures 2 and 3, 132 in figure 4) around the seat post tube 3 of the bicycle. At this point, the jaws (36 and 37 in figures 2 and 3, 136 and 37 in figure 4) are closed by rotating them about the rotation pin 39 (figures 2 and 3) or the pin 142b (figure 5), and are clamped around the seat post tube 3 through screwing of the screw 40.

In the embodiment in which the anchoring portion comprises a monolithic clip, such a clip is elastic, so that the two couplable ends can firstly be distanced to allow the arrangement of the clip about the seat post tube of the bicycle. Once the clip has elastically returned to its original position, the couplable ends are brought together by screwing a locking screw, until the clamping by deformation of the anchoring portion on the seat post tube is obtained.

In the case of a motorised gearshift, the clip 179 is clamped around the electric motor 105 and keeps it in operative connection with the worm screw 102 inserted in the housing seat 177, for example through an Oldham joint (not illustrated), housed in the tubular space 182 of the housing seat 177.

Of course, a man skilled in the art can bring numerous modifications and variants to the support for the bicycle front gearshift and to the front gearshift described above, in order to satisfy specific and contingent requirements, all of which are covered by the scope of protection of the present invention as defined by the following claims.

## Claims

1. Support (22, 22a, 122) for a bicycle front gearshift (20, 120), comprising an anchoring portion (32, 132) to a seat post tube (3) of a bicycle, and a coupling portion (34, 34a, 134) with a thrusting member (24) of a bicycle chain, **characterised in that** said anchoring portion (32, 132) is structurally distinct from said coupling portion (34, 34a, 134).

2. Support (22, 122) according to claim 1, wherein said coupling portion (34, 134) is removably associated with said anchoring portion (32, 132).

3. Support (22, 122) according to claim 2, wherein said coupling portion (34, 134) is associated with said anchoring portion (32, 132) through rigid connecting elements selected from the group consisting of pins (42, 142a, 142b), screws, bolts and rivets, said connecting elements being housed in respective holes (44, 45), aligned with each other, formed in said anchoring portion (32, 132) and in said coupling portion (34, 134).

4. Support (22, 22a, 122) according to claim 1, wherein said coupling portion (34, 34a, 134) is irremovably associated with said anchoring portion (32, 132).

5. Support (22, 22a, 122) according to claim 4, wherein said coupling portion (34, 34a, 134) is associated with said anchoring portion (32, 132) through gluing.

6. Support (22a) according to claim 4, wherein said coupling portion (34a) is associated with said anchoring portion (32) through co-moulding.

7. Support (22, 22a, 122) according to claim 4, wherein said coupling portion (34, 34a, 134) is associated with said anchoring portion (32, 132) through caulking.

8. Support (22, 22a, 122) according to any one of the previous claims, wherein said anchoring portion (32, 132) has a substantially annular shape.

9. Support (22, 22a, 122) according to claim 8, wherein said anchoring portion (32, 132) comprises two first ends (36d, 37d) that can be coupled with each other through at least one bolt or screw (40) to obtain the clamping of the anchoring portion (32, 132) around said seat post tube (3) of the bicycle.

10. Support (22, 22a, 122) according to claim 9, wherein said anchoring portion (32, 132) comprises a pair of structurally distinct jaws (36, 37, 136), each jaw (36, 37, 136) comprises one of said first ends (36d, 37d) and is associated with the other jaw (36, 37, 136) at a respective second end (36a, 37a, 136a) opposite said first end (36d, 37d, 136d).

11. Support (22, 22a, 122) according to claim 10, wherein said coupling portion (34, 34a, 134) is associated with at least one first jaw (36, 136) of said pair of jaws (36, 37, 136).

12. Support according to claim 9, wherein said anchoring portion comprises a single jaw defining an elastic monolithic clip.

13. Support (122) according to any one of the previous claims, wherein said anchoring portion (132) comprises a part (162) that, when the support (122) is mounted on the seat post tube (3) of the bicycle, faces towards the rear wheel (160) of the bicycle and is lower than the remaining part of the anchoring portion (132).

14. Support (22, 122) according to any one of the previous claims, wherein said anchoring portion (32, 132) comprises at least one connecting part (33, 133) to said coupling portion (34, 134) housed in a groove (48, 148) formed in said coupling portion (34, 134).

15. Support (122) according to claim 14 when depending on claim 13, wherein said at least one connecting part (133) is defined in said part (162) intended to face towards the rear wheel (160) of the bicycle and wherein said groove (148) has end portions arranged at different heights so that, when said support (122) is mounted on the seat post tube (3) of the bicycle, an end portion (148b) of said groove (148) facing towards the rear wheel (160) of the bicycle is lower than the other end portion (148a) of said groove (148).

16. Support (122) according to claim 14 or 15, wherein said connecting part (133) is held in said groove (148) through pins (142a, 142b) and gluing.

17. Support (122) according to any one of the previous claims, wherein said coupling portion (134) comprises a seat (177) for housing a worm screw (102) for a motorised gearshift.

18. Support (22, 22a, 122) according to any one of the previous claims, wherein said coupling portion (34, 34a, 134) is made from composite material.

19. Support (22, 22a, 122) according to claim 18, wherein said coupling portion (34, 34a, 134) is made from reinforced composite material.

20. Support (22, 22a, 122) according to any one of the previous claims, wherein said anchoring portion (32, 132) is at least partially made from a material with a linear thermal expansion coefficient lower than or equal to 5·10⁻⁵ m/m°K.

21. Support (22, 122) according to claim 20 when depending on claim 14, wherein at least said connecting part (33, 133) of said anchoring portion (32, 132) is made from said material with thermal expansion coefficient lower than or equal to 5·10⁻⁵ m/m°K.

22. Support (22, 22a, 122) according to claim 20 or 21, wherein said material is a metallic material.

23. Support (22, 22a, 122) according to claim 20 or 21, wherein said material is a structural composite material.

24. Bicycle front gearshift (20, 120), comprising a support (22, 22a, 122) and a thrusting member (24) of a bicycle chain, connected to each other by at least two articulation arms (26, 28), **characterised in that** said support (22, 22a, 122) is a support according to any one of the previous claims.

25. Bicycle comprising a front gearshift (20, 120) according to claim 24.

26. Method for manufacturing a support (22, 22a, 122) for a bicycle front gearshift (20, 120), comprising an anchoring portion (32, 132) to a seat post tube (3) of a bicycle and a coupling portion (34, 34a, 134) with a thrusting member (24) of a bicycle chain, **characterised in that** it comprises the following steps of:
- making said anchoring portion (32, 132),
- making said coupling portion (34, 34a, 134), and
- rigidly associating said coupling portion (34, 34a, 134) and said anchoring portion (32, 132) with each other.

27. Method according to claim 26, wherein said coupling portion (34, 134) is removably associated with said anchoring portion (32, 132).

28. Method according to claim 27, wherein said coupling portion (34, 134) is associated with said anchoring portion (32, 132) through pins (42, 142a, 142b), screws, bolts and/or rivets.

29. Method according to claim 26, wherein said coupling portion (34, 34a, 134) is irremovably associated with said anchoring portion (32, 132).

30. Method according to claim 29, wherein said coupling portion (34, 34a, 134) is associated with said anchoring portion (32, 132) through gluing.

31. Method according to claim 29, wherein said coupling portion (34a) is associated with said anchoring portion (32) through co-moulding.

32. Method according to claim 29, wherein said coupling portion (34, 34a, 134) is associated with said anchoring portion (32, 132) through caulking.
